Europäisches Patentamt

European Patent Office

Office européen des brevets

(11) Publication number: **0 424 116 A2**

# EUROPEAN PATENT APPLICATION

(21) Application number: 90311377.7

(51) Int. Cl.⁵: **G06F 5/06**

(22) Date of filing: **17.10.90**

(30) Priority: **17.10.89 JP 267986/89**

(43) Date of publication of application:
**24.04.91 Bulletin 91/17**

(84) Designated Contracting States:
**DE FR GB IT**

(71) Applicant: **International Business Machines
Corporation
Old Orchard Road
Armonk, N.Y. 10504(US)**

(72) Inventor: **Numata, Tsutomu**

2-11-11-302 Sohbudai
Sagamihara-shi, Kanagawa-ken(JP)
Inventor: **Ohgaki, Kazutaka**
**Hachimanbiru 304, 3600 Kamitsuruma**
**Sagamihara-shi, Kanagawa-ken(JP)**
Inventor: **Yamaguchi, Mario**
**14-8-204 goh, Minamifujisawa**
**Fujisawa-shi, Kanagawa-ken(JP)**

(74) Representative: **Bailey, Geoffrey Alan**
**IBM United Kingdom Limited Intellectual
Property Department Hursley Park
Winchester Hampshire SO21 2JN(GB)**

(54) **Buffer control apparatus.**

(57) Buffer control apparatus for making a timing control for reading and writing data to and from a buffer used in for example a hard disk device. A write pointer specifies a write address of a buffer and a read pointer specifies a read address. A comparator compares the values of the pointers and when an equal signal is output from the comparator, a discriminator identifies one of the write and read pointers which has caught up with the other. Writing to the buffer is inhibited when the write pointer has caught up with the read pointer and reading from the buffer is inhibited when the read pointer had caught up with the write pointer.

FIG. 3

## BUFFER CONTROL APPARATUS

The present invention relates to buffer control apparatus for timing control of reading and writing data to and from a buffer used in, for example, a hard disk device.

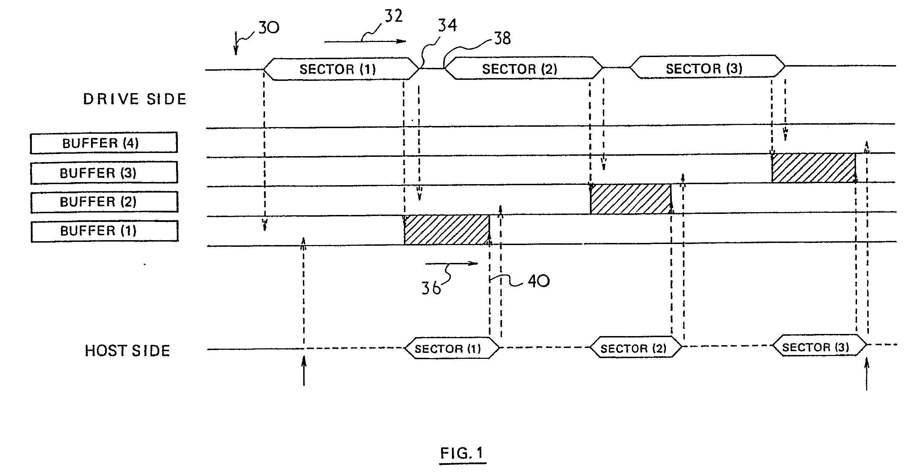

Generally, a plurality of buffers are used for data transfer to and from a hard disk device and a hard disk controller performs the switching of these buffers and the stopping and restarting of data transfer, based on a control program. An example of such a system is shown in Fig. 1 of the accompanying drawings the operation of which will now be described.

First, data transfer from the disk drive to a buffer e.g. buffer (1) is started as is indicated by 30. Thereafter, transfer of the data from one sector of the drive is awaited 32, and as this transfer has ended 34, the buffer to which the data transfer is to be made from the drive is incremented to the next one e.g. buffer (2). Then while starting data transfer from the buffer to the host as is indicated by 36, the data transfer from the drive to the buffer is restarted as indicated by 38. Thereafter, the end of data transfer of one sector to the host is awaited as is indicated by 40. Following this operation the monitoring of the end of each data transfer, change of buffer, transfer and restart are repeated.

The method of controlling data transfer by a control program is this way poses a problem in that monitoring the end of data transfer imposes a heavy burden on the central processing unit (CPU), rendering difficult such other operations as, for example, control of actuators and processing of commands from the host. The processing speed is limited, becaus this control is made by a program. Particularly in such small-sized systems as hard disk devices, the control of the actuators, etc. is performed by a single CPU. Sometimes interruptions occur during such operations as buffer change, etc., resulting in a very protracted processing time.

For this reason, it is desired that the hard disk controller itself can independently perform the series of processing operations without relying on a control program. A technique of making a timing control for writing data into buffers and for reading data from buffers without depending on monitoring by a program is required including a need for preventing reading from buffers which have not yet been filled with data and from over writing data into buffers from which data have not yet been read.

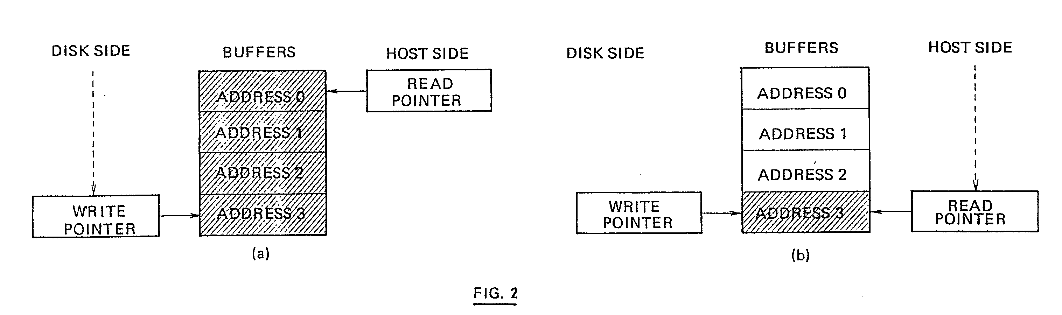

According to the technique disclosed in Japanese Published Unexamined Patent Application (PUPA) No. 61-60124, shown in Figure 2 of the accompanying drawings, a write pointer for specifying a write address of one of the buffers and a read pointer for specifying a read address of one of the buffers are provided. The value of the write pointer and that of the read pointer are compared at all times and only when the value of the write pointer is larger than that of the read pointer is reading from the one of the buffers permitted. The write pointer successively specifies the addresses 0, 1, 2 and 3 of the buffers, to write data into these addresses [refer to Figure 2 (a)] and, thereafter, the read pointer successively specifies the addresses 0, 1, 2 and 3 of the buffers, to read data from these addresses [refer to Figure 2 (b)]. The shaded regions of the buffers in Figure 2 are regions where data exist.

With this technique it is impossible to perform read, unless the value of the write pointer is larger than that of the read pointer. Therefore, for example, even after the addresses 0 and 1 of the buffer of Figure 2 have become empty by a completion of the reading therefrom, it is impossible to write data into these addresses by setting the address of the write pointer to 0 and 1 until after the data has been read from the buffer at address 3. This restriction results in lower operation efficiency of the buffer and reduced data transfer rate.

According to the present invention buffer control apparatus is described, for controlling the writing to and reading from buffers provided between two data buses comprising a write pointer for incrementally specifying a write address of one of said buffers; a read pointer for incrementally specifying a read address of one of said buffers; means for indicating when both pointers specify the same address; and means for inhibiting the writing to or reading from said same address by the later pointer to specify that address.

In order that the invention may be fully understood, a preferred embodiment thereof will be described by way of example with reference to the accompanying drawings, in which:

Figure 3 schematically shows the operation buffer control apparatus according to the present invention;

Figures 4 and 5 show the circuit of the buffer control apparatus embodying the present invention;

Figures 6 and 7 illustrate examples of the operation of the embodiments shown in Figures 3, 4 and 5; and

Figure 8 illustrates the operation when the buffers are used in a ringed arrangement.

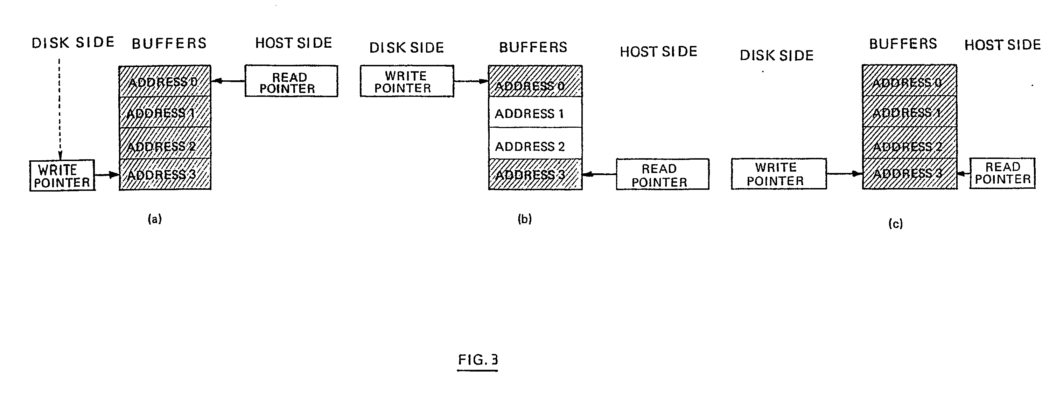

As shown in Figure 3 (a), a write pointer successively specifies addresses 0, 1, 2 and 3 of the buffers and data are then written into these addresses. Subseguently, a read pointer successively specifies the addresses 0, 1, 2 and 3 of the buffers and the data are then read from these addresses. It is now assumed that reading data from addresses, for example 0, 1 and 2 of the buffers has been completed. Under this condition, the control has heretofore been so configured that reading may be made only when the value of the write pointer is larger than the read pointer. Thus in order to enable reading from the address 3, the write pointer was not allowed to specify the address 0 until address 3 had been completed. According to the present embodiment the control is so configured that the operation of one of the pointers which has caught up with the other is stopped. Accordingly, as shown in Figure 3 (b), the write pointer is allowed to specify the address 0 of a buffer, thereby enabling writing of data at this address. The value of the write pointer may be increased, until it coincides with the value of the read pointer. As shown in Figure 3 (c), if the read pointer is assumed to have specified the address 3, the operation on the write side is stopped, as the value of the write pointer has reached the address 3. This operation is performed for prevention of writing a new data at this address. Note that in Figure 3, the shading indicates that data is stored in the buffer.

In the preferred embodiment buffer control apparatus is so designed that even when the data in the buffer to be written to or read from the host and drive sides encompass a plurality of sectors, writing and reading can be conducted continuously, without monitoring each between-sectors.

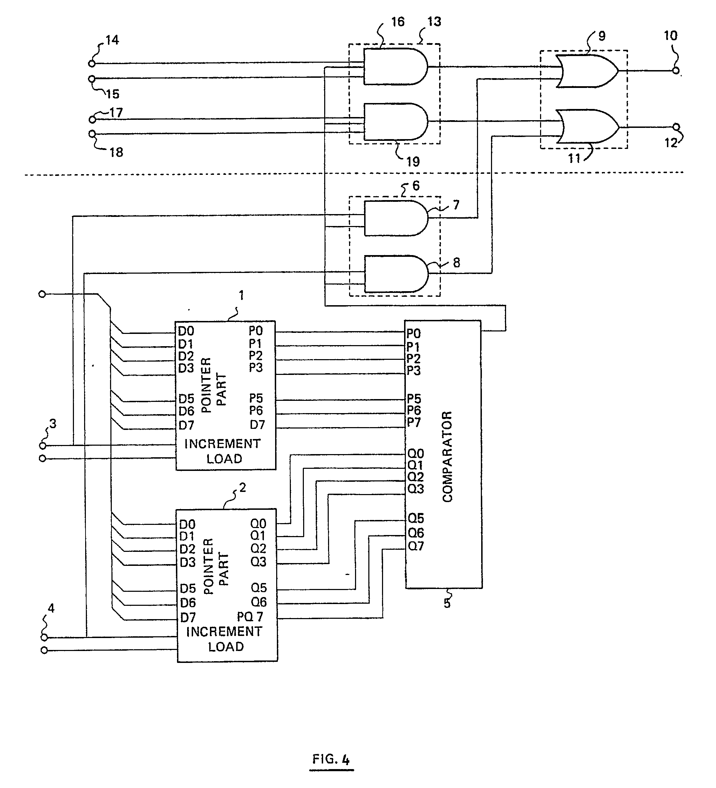

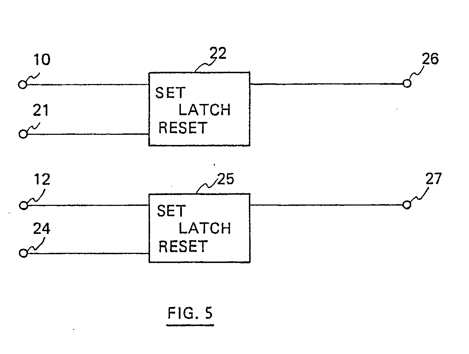

Logic associated with such a system for preventing reading from buffers which have not yet been filled with data or writing to buffers holding data still to be read is shown in Figures 4 and 5.

As shown in Figure 4 pointer 1 on the drive side and pointer 2 on the host side comprise an 11-bit register functioning as an incremental register. The increment takes place when a signal which is output from the drive or host side, upon ending transfer of data contained in one sector, is inputted into either increment terminal of pointer 1 or 2 through terminal 3 or 4. Terminals D0-D7 are terminals into which address data from the host side are input. In the event of overflow, reset to "0" is made and the value which causes overflow can be set by a register separately provided.

A comparator 5 compares the value of the drive side pointer which is output terminals P0-P7 of the pointer 1 with the value of the host side pointer which is output from terminals Q0-Q7 of the pointer 2. The comparator outputs an equal signal when these values become equal.

A discriminator circuit 6 identifies either the drive side pointer or the host side pointer which has caught up with the other when the equal signal is output from the comparator 5. This discriminator circuit 6 comprises an AND circuit 7 which outputs a signal indicating that the drive side pointer has caught up with the host side pointer by way of taking the logical product of the equal signal from the comparator 5 and the drive side increment signal to the write pointer input through the terminal 3. The discriminator circuit 7 further comprises an AND circuit 8 which outputs a signal indicating that the host side pointer has caught up with the drive side pointer by way of taking the logical product of the equal signal from the comparator 5 and the host side increment signal to the read pointer input through terminal 4.

The signal output from the AND circuit 7 is output from a terminal 10 through an OR circuit 9 as a signal for inhibiting the drive side data transfer (reading data from the buffer or writing data into the buffer). The output signal from the AND circuit 8 is output from a terminal 12 through an OR circuit 11 as a signal for inhibiting the host side data transfer (reading data from the buffer or writing data into the buffer).

An auxiliary discriminator circuit 13 regards one of either the drive or host side pointers which started data transfer later, as the one which has caught up with the other when the equal signal is output from the comparator 5, i.e. when the values of the drive and host side pointers are equal before data transfer has been started at both the drive and host sides. This auxiliary discriminator circuit 13 comprises an AND circuit 16 which outputs a signal for regarding the drive side pointer as having caught up with the host side pointer by taking a logical product of the equal signal from the comparator 5, a drive side data transfer start signal i.e. a start writing signal input from a terminal 14 and a host side in operation signal i.e. a reading in operation signal input from a terminal 15. The auxiliary discriminator circuit 13 further comprises an AND circuit 19 which outputs a signal for regarding the host side pointer as having caught up with the drive side pointer by taking a logical product of the equal signal from the comparator 5, a host side data transfer start signal i.e. a start reading signal input from a terminal 17 and a drive side in operation signal i.e a writing in operation signal input from a terminal 18.

The output signal from AND circuit 16 is output from terminal 10 through OR circuit 9 as a signal for inhibiting the drive side data transfer. The output signal from AND circuit 19 is output from terminal 12 through OR circuit 11 as a signal for inhibiting the host side data transfer.

Figure 5 shows a circuit which not only interrupts the drive or host side data transfer determined to be inhibited by the circuit shown in Figure 4, but also restarts the data transfer when the values of the drive and host side pointers become unequal when the value of either one of the pointers has been up-dated i.e when the value of either one of the pointers has been incremented.

The circuits shown in Figure 5 comprise a latch circuit 22 which is set by the drive side data transfer inhibition signal input from terminal 10 and which is reset by the host side increment signal input from terminal 21 which shows completion of the host side data transfer and a latch circuit 25 which is set by the host side data transfer inhibition signal input from the terminal 12 and which is reset by the drive side increment signal input from the terminal 24, which shows completion of the drive side data transfer.

The signal from the latch circuit 22 is output from a terminal 26 for interrupting or restarting the drive side data transfer. The signal from the latch circuit 25 is output from a terminal 27 as one for interrupting or restarting the host side data transfer.

The buffer control apparatus configured as hereabove-described has the following data transfer control rules:

Rule 1

When a first pointer has caught up with a second pointer midway in the process of making a data transfer, the data transfer on the first pointer side to interrupted. When the second pointer had been incremented, the first pointer side data transfer which has been interrupted is restarted.

Rule 2

If the first and second pointers are equal, before data transfer has started, the data transfer on the side of the pointer which starts the other is postponed.

In the following, examples of the operation of buffer control apparatus embodying this invention are described:

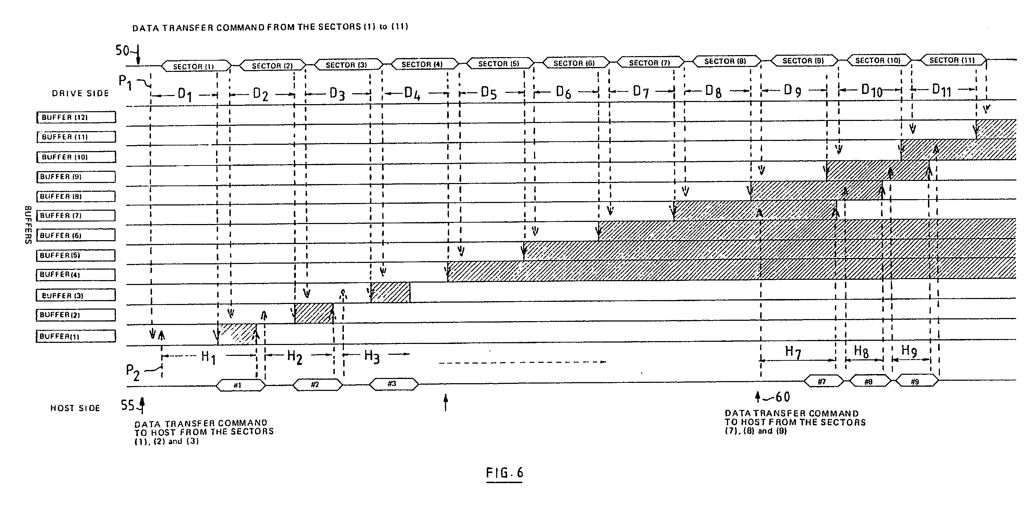

Figure 6 depicts a first operation example.

Referring to Figure 6, broken-line arrows P1 represent a drive side pointer, with the points reached by the arrow tips giving the respective values of the pointer. Thus the pointer P1 specifies, respectively, the buffers (1), (2), (3), (4), (5), (6), (7), (8), (9), (10) and (11) in the periods of D1, D2, D3, D4, D5, D6, D7, D8, D9, D10 and D11. Broken-line arrows P2 represent a host side pointer, with the points reached by the arrow tips giving the respective values of the pointer. Thus the pointer P2 specifies, respectively, the buffers (1), (2), (3), (7), (8) and (9) in the periods of H1, H2, H3, H7, H8 and H9. It is assumed that at the time represented by 50 in Figure 6, a command to "transfer to respective buffers the data stored in sectors (1) through (11) of a disk" is issued and subseguently, at the time represented by 55, a command to "transfer to respective hosts the data stored in sectors (1), (2) and (3)" is issued. First, the operation starts from the drive side and the data in sector (1) of the disk is transferred to the buffer (1) indicated by the drive side pointer P1. Subseguently, the host side operation starts and the host side pointer P2 specifies the same buffer (1) as specified by the disk side pointer P1, but the AND circuit 19 issues a signal for regarding the host side pointer as having caught up with the drive side pointer a host side data transfer inhibition signal is then issued from the OR circuit 11 and a host side data transfer interruption signal is thereby generated from the latch circuit 25; as a consequence, reading data to the host side from buffer (1) is inhibited.

As the data transfer from the drive side to the buffer (1) has been completed and the drive side pointer P1 is incremented to 2, the host side data inhibition signal ceases to be output from the OR circuit 11, but a host side data transfer restart signal is output from the latch circuit 25. The data in buffer (1) is then transferred to the host side. Thus data in buffer (1) is transferred to the host side, in a period when the period D1 and the period H1 are not overlapping with each other.

As the drive side pointer P1 is incremented to 2 to specify buffer (2), the data in sector (2) is transferred from the drive side to buffer (2).

As the data transfer from buffer (1) to the host side has been completed, the host side pointer P2 specifies sector (2) as with drive side pointer P1, but a host side data transfer inhibition signal is output from the OR circuit 11 and a host side data transfer interruption signal is generated from the latch circuit 25; consequently, reading data from buffer (2) to the host side is inhibited. Then, as the data transfer from the drive side to the buffer (2) has been completed and the drive side pointer P1 is incremented to 3, the host side data transfer inhibition signal ceases to be output from the OR circuit 11, but a host side data transfer restart signal is output from the latch circuit 25. The data in buffer (2) is then transferred to the host side. Thus the data in buffer (2) is transferred to the host side during a period when period D2 and period H2 are not overlapping with each other.

Similarly, in the period when period D3 and period H3 are not overlapping with each other, the data of sector (3) stored in buffer (3) is transferred to the host side.

Thereafter, the drive side pointer P1 is incremented to transfer the data stored in sectors (4), (5), (6), (7) and (8) to the buffers (4), (5), (6), (7) and (8) in respective periods D4, D5, D6, D7 and D8.

It is assumed, then, that at the time indicated by 60 in Figure 6, a command to "transfer the data stored in the sectors (7), (8) and (9) to the host" has been issued. Then the host side pointer P2 is set to 7, to specify buffer (7). At this time, the drive side pointer P1 is specifying buffer (9), so the values of these two pointers are not in agreement with each other; accordingly, no host side data transfer inhibition signal is output from the OR circuit 11, permitting the data transfer from buffer (7) to the host side to begin.

As the data transfer from buffer (7) to the host side has been completed, the host side pointer P2 is incremented so as to specify buffer (8), but at this time, the drive side pointer P is specifying buffer (10); therefore, the data transfer from buffer (8) to the host side is started as is the data transfer from buffer (7).

Similarly, the data transfer from buffer (9) to the host side is started as the host side pointer P2 is incremented to (9).

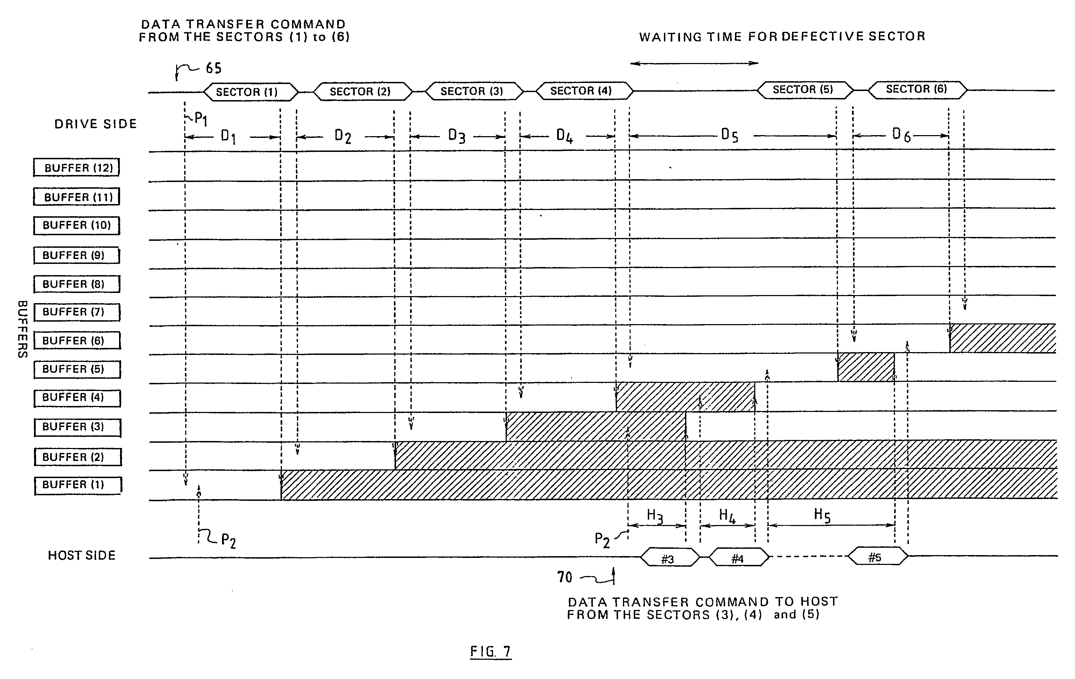

Figure 7 represents a second operation example.

It is assumed that at the point indicated by 65 in Figure 7, a command to "transfer to respective buffers the data stored in sectors (1) through to (6) of a disk" is issued to the drive side. At this time, since the host side is not in operation, no signal for regarding the drive side pointer as having caught up with the other is output from the AND circuit 16 and while the values of the pointers P1 and P2 are equal, no drive side increment signal is input to terminal 3, the AND circuit 7 does not output a signal indicating that the drive side pointer has caught up with the host side pointer; therefore, no drive side data transfer inhibition signal is output from the OR circuit 9. Accordingly, while the drive side pointer P1 is specifying buffer (1), the data from sector (1) is transferred to buffer (1). Subsequently, the drive side pointer P1 successively specifies buffers (2), (3), (4) and (5), but the values of these two pointers are unequal every time and, therefore, the data of the sectors (2), (3), (4) and (5) are respectively transferred to buffers (2), (3), (4) and (5). With reference to Figure 5, the reason why the period D5 in which the drive side pointer P1 is specifies sector (5) is prolonged is that because sector (5) is assigned to a neighbouring sector because of a defect in the physical sector which was originally to be assigned as sector (5), the head has taken a long time in arriving at sector (5).

It is assumed that at the time indicated by 70 in Figure 7, a command to "transfer the data stored in sectors (3), (4) and (5) to the host side" has been issued. In response thereto, the host side pointer P2 specifies buffer (3). At this time, the drive side pointer P1 is specifying buffer (5), thus the values of these two pointers are unequal and, accordingly, no host side data transfer inhibition signal is output from the OR circuit 11; therefore, the data of sector (3) is transferred to the host side from buffer (3). The host side pointer P2, then, specifies the buffer (4), after completing this transfer, but at this time, the drive side pointer P1 is specifying the buffer (5); therefore, the values of these two pointers are unequal. The data of the sector (4) is then transferred to the host side from buffer (4) similarly as in the case of buffer (3).

Upon completion of this transfer, the host side pointer P2 is incremented so as to specify buffer (5) as a result, the values of pointers P1 and P2 become equal. In this instance, AND circuit 8 outputs a signal indicating that the host side has caught up with the drive side. The OR circuit 11 outputs a host data transfer inhibition signal, to inhibit read from buffer (5) to the host side. Thereafter, as the data transfer from the drive side to buffer (5) has been completed and the drive side pointer P1 is incremented to 6, the host side pointer P2 and the drive side pointer P1 are no longer equal. Then the comparator 5 does not issue an equal signal; consequently, the latch circuit 25 outputs a host side data transfer restart signal. Thereupon, the transfer of the sector (5) data from the buffer to the host side is begun.

This example suggests that the reading of data from a buffer which has not yet been filled with data is prevented.

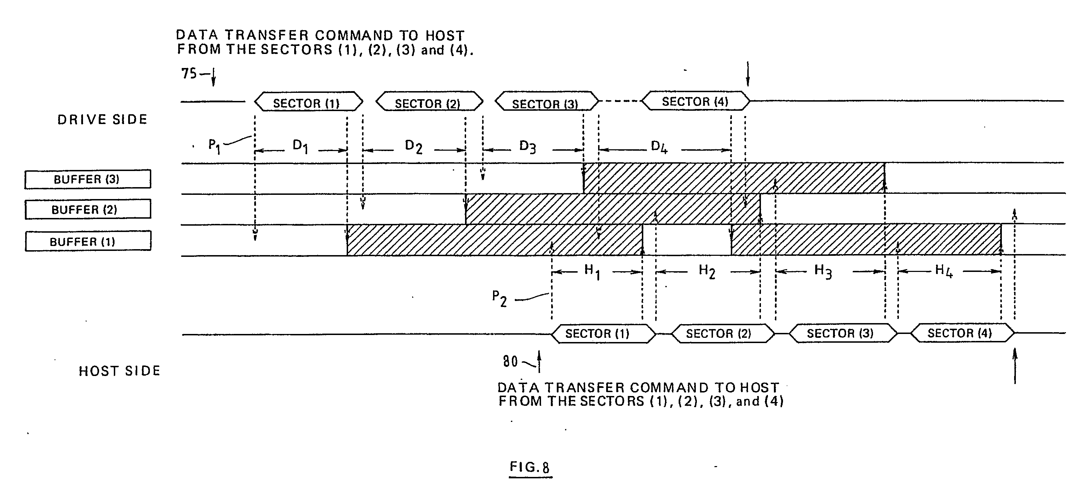

Figure 8 illustrates use of buffers in a ringed arrangement.

It is assumed that at the point indicated by 75 in this figure, a command to "transfer the data contained in the four sectors (1) through (4) to buffers" has been issued.

Then as in the example shown in Figure 5, the data stored in sectors (1), (2) and (3) are respectively transferred to buffers (1), (2) and (3).

It is assumed that at the time indicated by 80 in Figure 8, a command to "transfer to the host the data stored in the sectors (1), (2), (3) and (4)" has been issued. In response thereto, the host side pointer p2 specifies the buffer (1). At this time, the drive side pointer P1 is specifying the buffer (3). Thus these two pointers are not in agreement with each other. Accordingly, no host side data transfer inhibition signal is output from OR circuit 11. The data from sector (1) is then transferred from buffer (1) to the host side.

During this data transfer, the value of the drive side pointer P1 is incremented, so that this pointer P1 comes to specify buffer (1). The comparator 5 then outputs an equal signal and since a drive side increment signal is impressed on terminal 3, the AND circuit 7 outputs a signal of showing that the drive side pointer has caught up with the host side pointer and consequently a drive side data transfer inhibition signal is output from OR circuit 9. Accordingly, at this time, the data from sector (4) is not transferred to buffer (1).

As the data transfer from buffer (1) to the host side has been completed, the host side pointer P2 is so incremented as to specify buffer (2). The comparator 5 then ceases to output the equal signal and, consequently, no drive side data transfer inhibition signal output from OR circuit 9. As a result, latch circuit 22 outputs a drive side data transfer restart signal. Thereby the data from sector (4) is written into buffer (1). Heretofore, writing could not be made into an address which was smaller than the address being read, because reading could be made only when the value of the write pointer P1 was larger than the value of the read pointer P2. In the embodiment of this invention, data can be written to buffer (1) which has an address smaller than that of buffer (2) from which data is being read, as hereabove-described, thus enabling effective utilisation of buffers.

Even while writing the sector (4) data into buffer (1), the transfer of the sector (2) data stored in buffer (2) to the host side may be done. This is allowed, because the values of these two pointers P1 and P2 are not equal. After the data transfer from buffer (2) to the host side has been completed, the pointer P2 successively specifies the buffers (3) and (1), whereby the data transfer from these buffers to the host side is performed.

In the above-described embodiments, the disk is placed on the write side, while host is placed on the read side, but the reverse relationship may be equally applied.

The above-described embodiments illustrate applications of this invention to hard disk devices, but this invention is equally applicable to other equipment having buffers.

As described in the foregoing, according to this invention, a write pointer for specifying a write address and a read pointer for specifying a read address are provided and the values of the write and read pointers are always compared. The pointer which has caught up with the other is identified when the values of the write and read pointers are equal. Writing into a buffer is inhibited, if the write pointer is identified as having caught up with the read pointer and conversely, reading from a buffer is inhibited, if the read pointer is identified as having caught up with the write pointer. Accordingly, the timing control for writing data into buffers and reading data from buffers may be performed without relying on any program and moreover, extremely efficient processing can be achieved.

Buffer control apparatus and a method have been described which permits writing data into regions of buffers from where the data has already been read, irrespective of the value of the write pointer and that of the read pointer, thus ensuring high operation efficiency of the buffers.

The buffer control apparatus for timing control of writing to and reading from buffers provided between two data buses comprises a write pointer for specifying a write address of one of said buffers; a read pointer for specifying a read address of one of said buffers; a comparator for comparing the value of said write address with said address and outputting a signal when the values of the addresses become equal; discriminating means for identifying one of said write and read pointers which has caught up with the other, when an equal signal is output from said comparator; and writing and reading regulating means for inhibiting writing into one of said buffers, when the write pointer is identified by said discriminating means, and for inhibiting reading data from one of said buffers, when the read pointer is identified by said discriminating means.

A method for writing to and reading from a buffer using a write pointer for specifying a write address and a read pointer for specifying a read address, wherein when the values of said write and read pointers become equal, the writing operation or the reading operation corresponding to one of the write or read pointer which has caught up with the other is stopped has also been described.

Further, a method for writing to and reading from a buffer using a write pointer for specifying a write address and a read pointer for specifying a read address, comprising the steps of inhibiting the reading operation specified by said read pointer when the values of said write and read pointers become equal due to the value of said read pointer being altered without changing the value of said write pointer, and inhibiting the writing operation specified by said write pointer, when the values of said write and read pointers become equal due to the value of said write pointer being altered without changing that of said read pointer has been described.

## Claims

1. Buffer control apparatus for controlling the writing to and reading from buffers provided between two data buses comprising:
a write pointer for incrementally specifying a write address of one of said buffers;
a read pointer for incrementally specifying a read address of one of said buffers; and
means for indicating when both pointers specify the same address;
and means for inhibiting the writing to or reading from said same address by the later pointer to specify that address.

2. Apparatus as claimed in claim 1 wherein said indicating means comprises:

means for indicating when one of said pointers has caught up with the other pointer; and

means for identifying which of said pointers has caught up with the other pointer.

3. Apparatus as claimed in claim 2 wherein said identifying means comprises a logic circuit for identifying when the write pointer has caught up with the read pointer and when the read pointer has caught up with the write pointer.

4. Apparatus as claimed in claim 3 wherein said logic circuit comprises:

a first logic circuit for identifying when the write pointer has caught up with the read pointer, the inputs to said first logic circuit comprising a signal from said identification means and a signal to increment the write pointer to the next write address; and

a second logic circuit for identifying when the read pointer has caught up with the write pointer, the inputs to said second logic circuit comprising a signal from said identification means and a signal to increment the read pointer to the next read address.

5. Apparatus as claimed in any of claims 3 or 4 wherein said logic circuit further comprises an auxiliary logic circuit which identifies the pointer which has caught up with the other pointer as being the pointer which began data transfer later than the pointer with which it has caught up.

6. Apparatus as claimed in claim 5 wherein said auxiliary logic circuit comprises:

a first auxiliary logic circuit for identifying when the write pointer has caught up with the read pointer, the inputs to said first auxiliary logic circuit comprising a signal from said identification means, a command signal to write data into the address specified by the write pointer and a signal that data is being read from the address specified by the read pointer; and

a second auxiliary logic circuit for identifying when the read pointer has caught up with the write pointer, the inputs to said second auxiliary logic circuit comprising a signal from said identification means, a command signal to read data from the address specified by the read pointer and a signal that data is being written to the address supplied by the write pointer.

7. Apparatus as claimed in any of the preceding claims, wherein said inhibiting means comprises an inhibiting logic circuit which inhibits writing to one of said buffers when the write pointer has been identified as having caught up with the read pointer and inhibits reading from one of said buffers when the read pointer has been identified as having caught up with the write pointer.

8. Apparatus as claimed in any of the preceding claims, further comprising means for restarting reading from the buffer after reading has been inhibited and restarting writing to a buffer after writing has been inhibited.

9. Data processing apparatus including an incremental buffer store and buffer control apparatus as claimed in any of the preceding claims.

10. Apparatus as claimed in claim 9 including two data buses coupled to the buffer store for writing data to and reading data from said buffer store.

FIG.1

(PRIOR ART)

DISK SIDE    BUFFERS    HOST SIDE

| | |
|---|---|
| | READ POINTER |

ADDRESS 0
ADDRESS 1
ADDRESS 2
ADDRESS 3

WRITE POINTER

(a)

DISK SIDE    BUFFERS    HOST SIDE

ADDRESS 0
ADDRESS 1
ADDRESS 2
ADDRESS 3

WRITE POINTER

READ POINTER

(b)

FIG. 2

(PRIOR ART)

DISK SIDE  BUFFERS  HOST SIDE

| WRITE POINTER | → | ADDRESS 0 | ← | READ POINTER |
| ADDRESS 1 |
| ADDRESS 2 |
| ADDRESS 3 |

(a)

DISK SIDE  BUFFERS  HOST SIDE

| WRITE POINTER | → | ADDRESS 0 |
| ADDRESS 1 |
| ADDRESS 2 |
| ADDRESS 3 | ← | READ POINTER |

(b)

DISK SIDE  BUFFERS  HOST SIDE

| ADDRESS 0 |
| ADDRESS 1 |
| WRITE POINTER | → | ADDRESS 2 |
| ADDRESS 3 | ← | READ POINTER |

(c)

FIG. 3

EP 0 424 116 A2

FIG. 4

FIG. 5

DATA TRANSFER COMMAND FROM THE SECTORS (1) to (11)

FIG. 6

DATA TRANSFER COMMAND
FROM THE SECTORS (1) to (6)

WAITING TIME FOR DEFECTIVE SECTOR

FIG. 7

DATA TRANSFER COMMAND TO HOST
FROM THE SECTORS (3), (4) and (5)

EP 0 424 116 A2

FIG.8